(19) Europäisches Patentamt
European Patent Office
Office européen des brevets

(11) **EP 2 482 176 A2**

## (12) EUROPEAN PATENT APPLICATION

(43) Date of publication:
**01.08.2012 Bulletin 2012/31**

(51) Int Cl.:
***G06F 3/048*** (2006.01)

(21) Application number: **11008787.1**

(22) Date of filing: **04.11.2011**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **05.11.2010 US 940616** | (71) Applicant: **SAP AG**<br>**69190 Walldorf (DE)**<br><br>(72) Inventor: **Werner, Horst**<br>**69190 Walldorf (DE)**<br><br>(74) Representative: **Müller-Boré & Partner**<br>**Patentanwälte**<br>**Grafinger Straße 2**<br>**81671 München (DE)** |

### (54) Multi-input gesture control for a display screen

(57) Improved multi-input gesture control for a display screen is enabled by using a first screen input to determine control operations that result from a second screen input that is followed by a gesture. A gesture that corresponds to a path traced on a display screen may define a new screen input or manipulate existing screen objects depending on some specific feature of the path or the entirety of the path.

102

```
104  RECEIVE FIRST SCREEN INPUT THAT IDENTIFIES FIRST
     LOCATION ON COMPUTER SCREEN

106  PROVIDE IMAGE MARKER THAT PERSISTS FOR REPONSE-
     TIME PERIOD AT THE FIRST LOCATION

108  RECEIVE SECOND SCREEN INPUT THAT IDENTIFIES
     SECOND LOCATION ON COMPUTER SCREEN

110  CHANGE TO ALTERNATIVE INPUT MODE BASED ON POSITION
     OF SECOND LOACATION RELATIVE TO IMAGE MARKER

112  RECEIVE SCREEN-INPUT GESTURE THAT INCLUDES MOTION
     ALONG PATH ON COMPUTER SCREEN
```

*Fig.1*

EP 2 482 176 A2

**Description**

TECHNICAL FIELD

The present invention relates generally to computing devices and more particularly to screen inputs for computing devices.

BACKGROUND

As computer devices with alternative input means, such as a touchscreen, become increasingly commonplace, new ways of user-device-interaction are becoming possible including, for example, zooming into or resizing objects with multi-touch gestures. New shapes or characters can also be input directly.

Typically, however, the range of possible control gestures is limited by a requirement to immediately decide what kind of action the user wants to take, and in most cases the system's behavior is determined by the specific area where a user provides input (e.g. touches) and the general direction of the user's gesture. By contrast, conventional desktop computer systems typically include a pointing device that enables at least one alternative input mode (e.g., via a mouse right-click).

SUMMARY

According to an aspect, a method of multi-input gesture control for a display screen is provided. The method may comprise receiving a first screen input that identifies a first location on the display screen. The method may further comprise providing an image marker at the first location in response to the first screen input, wherein the image marker persists on the display screen for a response-time period after the first screen input. The method may further comprise receiving a second screen input that identifies a second location on the display screen during the response-time period after the first screen input. The method may further comprise changing to an alternative input mode based on a position of the second location relative to the image marker. The method may further comprise receiving a gesture as a screen input in the alternative input mode, wherein the gesture includes a motion along a path on the display screen starting from the second location.

In some cases the image marker surrounds the first location as a single two-dimensional shape, and/or a persistence of the image marker is displayed by changing a color or intensity of the image marker over the response-time period.

Furthermore, the path of the completed gesture may define an input to an application program.

Also, the second location may lie inside the image marker. Further, it is possible the gesture defines a new shape on the display screen.

In some cases, the motion of the gesture defines a continuous manipulation of one or more shapes on the display screen.

Moreover, the second location may lie outside the image marker, and it may be that the gesture defines a resizing of one or more shapes on the display screen.

Also, it may be that one or more of the first and second screen inputs and the gesture result from touching the display screen.

Moreover, it may be that one or more of the first and second screen inputs and the gesture result from an application of a pointing device whose movements are echoed on the display screen by a pointer.

According to another aspect, a non-transitory computer-readable medium embodying instructions which, when executed by a computer, cause the computer to perform operations. The operations may comprise receiving a first screen input that identifies a first location on the display screen. The operations may further comprise providing an image marker at the first location in response to the first screen input, wherein the image marker persists on the display screen for a response-time period after the first screen input. The operations may further comprise receiving a second screen input that identifies a second location on the display screen during the response-time period after the first screen input The operations may further comprise changing to an alternative input mode based on a position of the second location relative to the image marker. The operations may further comprise receiving a gesture as a screen input in the alternative input mode, wherein the gesture includes a motion along a path on the display screen starting from the second location.

In some cases, the image marker surrounds the first location as a single two-dimensional shape, and/or a persistence of the image marker is displayed by changing a color or intensity of the image marker over the response-time period.

Moreover, the path of the completed gesture may define an input to an application program .

Further, the second location may lie inside the image marker. Also, the gesture may define a new shape on the display screen.

According to yet another aspect, an apparatus including a display screen is provided. The apparatus may comprise a first location-receiving module to receive a first screen input that identifies a first location on the display screen. The apparatus may further comprise a marker module to provide an image marker at the first location in response to the first screen input, wherein the image marker persists on the display screen for a response-time period after the first screen input. The apparatus may further comprise a second location-receiving module to receive a second screen input that identifies a second location on the display screen during the response-time period after the first screen input. The apparatus may further comprise a mode-changing module to change to an alternative input mode for the display screen based on a position of the second location relative to the image marker. The apparatus may further comprise a gesture-receiving module to receive a gesture as a screen input in the alternative input mode, wherein the gesture includes a motion along a path on the display screen starting from the second location. The apparatus may further comprise a storage module to persistently store display screen data that identifies the first location, the image marker, the second location, and the gesture.

In some cases, the image marker surrounds the first location as a single two-dimensional shape, and/or a persistence of the image marker is displayed by changing a color or intensity of the image marker over the response-time period.

Also, the path of the completed gesture may define an input to an application program.

Moreover, the second location may lie inside the image marker. Also, the gesture may define a new shape on the display screen.

Further, the motion of the gesture may define a continuous manipulation of one or more shapes on the display screen.

In addition, the second location may lie outside the image marker. Furthermore, the gesture may define a resizing of one or more shapes on the display screen.

In some cases, one or more of the first and second screen inputs and the gesture result from touching the display screen.

Also, one or more of the first and second screen inputs and the gesture may result from an application of a computer pointing device whose movements are echoed on the display screen by a pointer.

TECHNICAL DEFINITIONS

In the following text, *a computing device* may be referred to as a computer device, a display device or as a device. The computing device may include an electronic visual display, i.e. a display screen. The visual display may include (i.e. all or part of the visual display may have) a touchscreen. The computing device may be implemented as a mobile device, such as a mobile phone, as a portable computer or as a graphics tablet. The computing device could also be implemented as (part of) an appliance (e.g. a refrigerator) or an article of furniture such as a table.

*A touchscreen* may be understood as all or part of an electronic visual display that can detect the presence and location of a touch within the display area. The touchscreen may be implemented as all or part of a touch surface (e.g. a multi-touch surface) such as a table-top touch platform (e.g. Microsoft Surface) or a touch wall. The touchscreen may be capacitive, thereby supporting the use of a finger, a capacitive or conductive stylus or similar interaction mechanism capable of distorting the screen's electric field; alternatively, the touchscreen may use some other technology (e.g. it may be resistive) and support the use of a non-conductive stylus or insulating glove.

*A gesture* may be understood as a motion used to interact with a display screen, such as a touchscreen. The gesture may combine various actions or movements or both, and may be performed using a finger (i.e. a touch gesture) or pointing device (i.e. a pointing device gesture). The pointing device gesture may combine movements and clicks. The touch gesture may be a multi-touch gesture, i.e. where there are two or more points of contact with the display screen. The touch gesture may be as simple as using one or two fingers to trace out a trajectory or pattern, or as intricate as using all fingers of both hands in a complex sequence of movements. The touch gesture may include presenting one or more hand parts (e.g. in combination) in a particular configuration on the visual display. Hand parts may include fingers and thumbs. The touch gesture may further include motion or moving of the hand parts, e.g. lateral motion such as rotation, translation, scaling (expansion and contraction), etc. The motion or moving of the hand parts may include vertical motion relative to the visual display such as tapping, double-tapping, etc.

Upon completion, the gesture (or the path of the gesture) may be recognized as an input or command to an application program. Alternatively, the gesture may be continuously recognized and interpreted as multiple inputs or commands to the application program. In some cases, multiple gestures (i.e. a sequence of gestures) may be recognized and extracted from user input to the display device.

Recognition of a gesture (e.g. a touch gesture) as a command may be referred to as *drawing* the gesture. A template or model may include a number of predefined gestures and associated commands. When a user makes a gesture (e.g. in the form of a symbol) on a display screen that corresponds to or matches a predefined gesture, the command is carried out.

*A pointing device* is an input interface that allows a user to input spatial data to a computer. Input may be provided using physical gestures, e.g. point, click and drag, by moving the pointing device across a surface such as a desktop or by activating switches on the pointing device or some combination of both. An example of a pointing device is a rodent (i.e. a device generating mouse-like input) such as a mouse. The movements of a pointer or cursor on the display screen may correspond to or echo the movements of the pointing device.

*A persistence* may be a characteristic of state that outlives the process that created it. Thus, the persistence of an image marker may be displayed by showing the image marker or a changed image marker on a display screen. Accordingly, the image marker may persist on the display screen in a changed form, e.g. a faded image marker may be displayed. In some cases, display of the persistence of the image marker may be understood as the display of a state of the image marker after the action (e.g. touch) that created the image marker has ceased.

*Manipulation* or deformation of a shape on a display screen may include actions such as moving, rotating, stretching, bending, etc.

*Navigation* of a shape on a display screen may include view adjustment related actions such as zooming in on the shape, zooming out, panning, scrolling (slow or fast), etc.

BRIEF DESCRIPTION OF THE DRAWINGS

The present disclosure is illustrated by way of example and not limitation in the figures of the accompanying drawings, in which like references indicate similar elements and in which:

Figure 1 shows schematic representation of a method of multi-input gesture control for a display screen according to an example embodiment.

Figures 2A, 2B, 2C, 2D, 2E, and 2F show example screen images for the embodiment of Figure 1 where the completed gesture defines a screen input.

Figures 3A, 3B, 3C, 3D, 3E, and 3F show example screen images for the embodiment of Figure 1 where the gesture enables a manipulation or navigation of existing screen objects.

Figure 4 shows a block diagram of a computer system within which a set of instructions, for causing the computer to perform any one or more of the methodologies discussed herein, may be executed.

Figure 5 shows a schematic representation in accordance with an example embodiment for multi-input gesture control of a display screen.

DETAILED DESCRIPTION

The description that follows includes illustrative systems, methods, techniques, instruction sequences, and computing program products that embody the present invention. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures and techniques have not been shown in detail.

Example embodiments allow a multitude of more complex gestures by a user on a screen of a display device. For example, the user can draw a gesture, e.g., in form of a symbol, on the screen (e.g., using a finger or a pointing device such as a mouse) and the display device may determine a corresponding action when the gesture is complete.

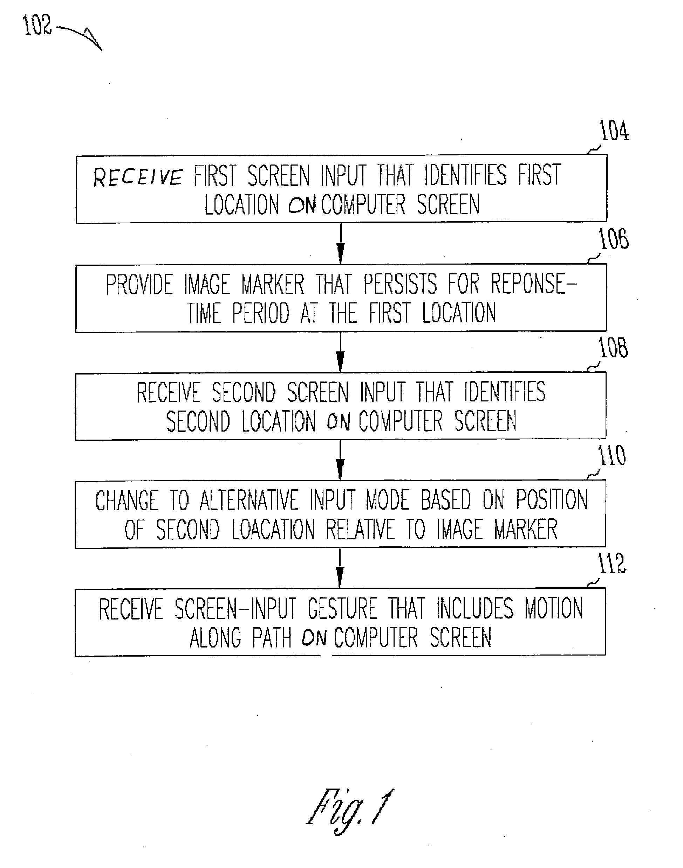

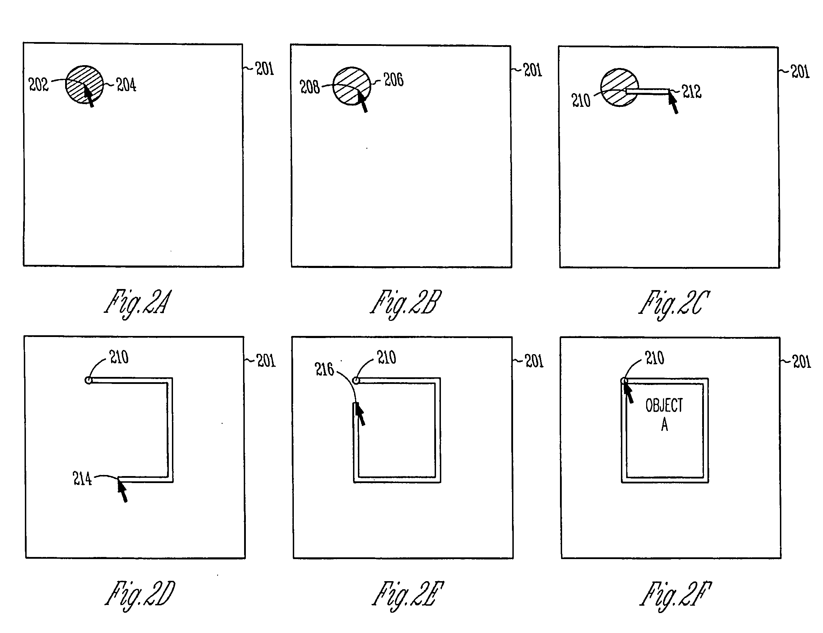

Figure 1 shows schematic representation of a method 102 of multi-input gesture control for a display screen 201 (see Figure 2A-F) according to an example embodiment. As shown at operation 104, the method 102 begins by receiving a first screen input that identifies a first location or position on the display screen 201. Screen inputs can be accomplished by conventional means including an application of a computer pointing device whose movements are echoed or mirrored on the display screen by a pointer (e.g., clicking a mouse to position a cursor). The echoed movement of the pointer on the display screen corresponds at least loosely to the movement of the pointing device. In the case of a computer with a touchscreen, the screen input can result from touching the screen, either directly by a user or through a physical pointer (e.g., a wand, stylus or pen).

Next, as shown at operation 106, an image marker 204 (see Figure 2A) is provided at the first location in response to the first screen input. The image marker may persist on the display screen for a response-time period after the first screen input 106. The response time period may be less than 10 seconds, less than 5 seconds, less than 3 seconds, or some similarly suitable value.

Figure 2A shows an example screen image where a pointer 202 (e.g., a cursor) is shown as an arrow to indicate the first location on the display screen 201. This pointer 202 is shown to be surrounded by a shaded image marker 204. In this case, the image marker 204 appears as a disk with a circular boundary; however, more general shapes and/or sizes are provided in other example embodiments. In an example embodiment, the image marker 204 surrounds the first location. The image marker 204 may be one or more of the following: continuous, regularly shaped, irregularly shaped, a single shape, two-dimensional, and without holes. Accordingly, the image marker 204 may surround the first location as a continuous single two-dimensional shape without holes. In other words, the image marker 204 may be implemented as a simply connected set in the 2-D plane. For example, an irregularly shaped image marker 204 may be shaped to resemble an ink blot that results from touching a sheet of paper with a fountain pen. Accordingly, the ink blot (or any other continuous shape) is displayed on the display screen 201 when the first screen input is received (see operation 104).

As shown at operation 108, the method 102 further includes receiving a second screen input that identifies a second location 210 (as shown in Figure 2B) or position on the display screen 201 during the response-time period after the first screen input. The response-time period allows a user to provide a second and subsequent input relative to the first input. The second input may be used to define a gesture associated with a predefined function of the computer device (e.g., a portable computer, mobile device such as a cellular telephone, or the like device having a display screen providing a user interface).

As time passes, the persistence of the image marker 204 during the response-time period can be displayed, e.g. by changing a color or intensity of the image marker 204. For example, the image marker may fade so that it disappears from the display screen 201 by the end of the response-time period. Thus, the persistence of the image marker 204 may be displayed by changing the color or reducing the intensity (or both) of the image marker 204 over the response-time period until the image marker 204 disappears at the end of the response-time period. Changing the color of the image marker 204 may involve modifying the color of the image marker 204 so that the color gradually comes to match the color of the display screen background, so that the image marker 204 is no longer visible at the end of the response-time period. In addition or alternatively, the persistence of the image marker may be displayed by changing the shape of the image marker 204, e.g. the image marker 204 may gradually become smaller over the response-time period until it disappears at the end of the response-time period.

Figure 2B shows an example where a changed image marker 206 is faded in color or intensity relative to the original image marker 204, and a pointer 208 indicates the second location on the display screen 201. (Note that the words first and *second* are used here and elsewhere for labeling purposes only and are not intended to denote any specific spatial or temporal ordering. Furthermore, the labeling of *a first* element does not imply the presence a *second* element. )

The method 102 next changes the input mode to an alternative input mode for the display screen 201 based on the position of the second location relative to the image marker 210. The method 102 next includes receiving a gesture as a screen input in the alternative input mode, where the gesture includes a motion along a path on the display screen 201 starting from the second location 210. In general, this path starts at the second location and ends at some completion of the gesture, either by explicitly terminating the input (e.g., releasing the computer pointing device or pointer) or satisfying some completion condition (e.g., completing a closed curve as shown in Figure 2F below).

For example, in Figure 2B the second screen input pointer 208 lies within the changed image marker 206 and triggers an input mode where the subsequent gesture input defines a new shape on the display screen (e.g., a characterization by spatial attributes). Figure 2C shows an example spatial outline defined by the motion of the pointer from the second location 210 to a subsequent point 212 in the path. Figure 2D shows the screen image after reaching a later point 214 in the path, where the changed image marker 206 is no longer shown (e.g., after the response-time period). The changed image marker 206 may however continue to be displayed to indicate that the gesture is being received as a screen input. Figure 2E shows the screen image after reaching a still later point 216 in the path. Eventually the gesture input is interpreted as a new shape whose outline is defined by the traced path (e.g., object A in Figure 2F). This may result, for example, when the path returns to (or becomes sufficiently close to) the second location 210. Thus, the user can "draw" the gesture on the display screen 201. In response to completion of the gesture, an application program of the device may then perform associated functionality.

More generally, this alternative input mode may use the completed gesture to define a screen input including, for example, generating a new shape (e.g., as in Figure 2F), grouping existing shapes (e.g., by surrounding them by a closed curve), deleting shapes (e.g., by a cross-out gesture), and invoking special operations on a shape (e.g., by associating specific gestures with special operations on certain shape types). Furthermore, in a case where multi-touch hardware is employed, the changed image marker 206 can be used as an additional input (e.g., second or third touchscreen input).

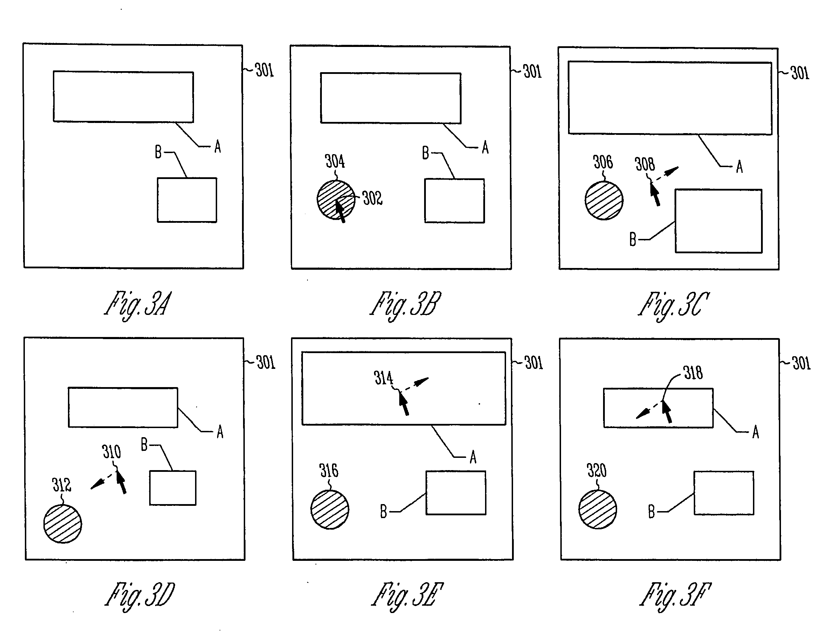

Alternative input modes may also enable the manipulation (e.g. resizing or moving) or navigation (e.g. zooming) of existing screen objects, either based on a completed gesture or operating continuously as the corresponding path is traced. Figure 3A shows a display screen 301 including an example screen image that includes two objects labeled A and B. Figure 3B shows a screen image where a pointer 302 (e.g., a cursor) is shown as an arrow to indicate the first location on the display screen 301. Similarly as in Figure 2A, this pointer 302 is surrounded by an image marker 304. The image marker 304 may be shaded.

Figure 3C shows a screen image including an image marker 306 and a pointer 308 that indicates a second location on the display screen 301. Similar to the second location 210 described with respect to Figure 2A, the first location indicated by the pointer 302 may be identified by a first screen input and the second location indicated by the pointer 308 may be identified by a second screen input, wherein the second screen input is received during a response-time period after the first screen input The second location indicated by the pointer 308 may be assumed to have the same characteristics as the second location 210 unless stated otherwise.

The image marker 306 may be changed relative to the image marker 304, e.g. faded. Starting from the pointer 308, a broken or non-continuous directed line is shown to indicate the motion of the gesture. In an example embodiment, the gesture may operates in this mode to resize objects A and B in correspondence to the continuously changing position along the path of the gesture relative to the first location (e.g., the center of the changed image marker 306) In this example, motion away from the image marker 306 expands objects A and B proportionately until the gesture is completed (e.g., by releasing the computer pointing device or no longer touching the screen). Positioning of the second location outside the image marker 306 may enable multitouch gestures, where the position of the image marker defines the position of the second finger.

Figure 3D shows a screen image where motion from the second location 310 towards an image marker 312 contracts objects A and B proportionately.

In Figures 3C and 3D the second location indicated by the pointer 308 and the second location 310 lie outside objects A and B and the resizing operation is applied to both objects. In contrast to the second location described with respect to Figures 2A-2F, the second location indicated by the pointer 308, and the second location 310 of Figures 3C and 3D may be outside the image markers 306 and 312.

Figures 3E and 3F each illustrate examples where the resizing operation can be focused to a specific screen object by locating the second location within that object. In Figure 3E, a second location 314 lies within object A, and motion from the second location 314 away from the image marker 316 expands object A but leaves object B unchanged. In Figure 3F a second location 318 lies within object A, and motion from the second location 318 towards the image marker 320 contracts object A but leaves object B unchanged. The second location 314 and the second location 318 may be assumed to have the same characteristics as the second location indicated by the pointer 308 unless stated otherwise.

The example resizing operations described above (e.g., Figures 3C, 3D, 3E, and 3F) can be carried out through linear scaling operations based on planar coordinates of the shapes. In Figure 3C for example, if the center (or some reference point) of the image marker 306 has coordinates $(x_0, y_0)$ and the pointer 308 is moved from coordinate $(x_1, y_1)$ to coordinate $(x_2, y_2)$ on the display screen, scale factors for resizing in the x and y dimensions may be as follows:

$$S_x = \left| \frac{x_2 - x_0}{x_1 - x_0} \right| \qquad\qquad S_y = \left| \frac{y_2 - y_0}{y_1 - y_0} \right| \qquad\qquad (1)$$

Then sizes (e.g., line lengths) and positions (e.g., (x,y) coordinates) are calculated by the following formulas for updating these values:

$$Size'_x = Size_x * S_x \qquad\qquad\qquad Size'_y = Size_y * S_y \qquad\qquad (2)$$

$$x' = x + x_0 * (1 - S_x) \qquad\qquad\qquad y' = y + y_0 * (1 - S_y). \qquad\qquad (3)$$

The claimed subject matter may lead to a number of advantages. In particular, it may be possible to draw complex gestures without being restricted to a dedicated screen area. This is possible because the image marker enables a user to visually distinguish between alternative input modes. Providing the second screen input in the response-time period may cause a command to be carried out. For example, the claimed subject matter may enable the following commands to be performed:

- creating new screen objects (e.g. shapes) with position, size and shape determined by the gesture,
- linking screen objects with a line,
- deleting screen objects by crossing them with a line,
- selecting a set of objects by drawing an ellipse around them,
- invoking special operations on an object.

Moreover, the claimed subject matter may facilitate a particularly intuitive man-machine interaction. Specifically, displaying the persistence of the image marker mimics the real-world phenomenon of dropping a blot of ink on a piece of paper and using a finger to draw figures.

Furthermore, according to the claimed subject matter, it is possible to draw gestures without multitouch technology. For example, zooming in on objects is traditionally performed on a touchscreen by performing a pinching gesture with two fingers. The claimed subject matter makes it possible to zoom in on an object using only one finger, by providing a second input during the response time and changing to an alternative input mode. The gesture received in the alternative input mode can then be used to resize the object. Thus, the image marker can act as a substitute for the second finger. The claimed subject matter may enable a similar effect with a one button pointing device or other in other situations where a display screen only accepts one input at a time (i.e. a single-input display).

Additional example embodiments relate to an apparatus for carrying out any one of the above-described methods. The apparatus may include a computer for executing computer instructions related to the methods described herein by way of example. In this example context the computer may be a general-purpose computer including, for example, a processor, memory, storage, and input/output devices (e.g., keyboard, display, disk drive, Internet connection, etc.). However, the computer may include circuitry or other specialized hardware for carrying out some or all aspects of the method. In some operational settings, the apparatus or computer may be configured as a system that includes one or more units, each of which is configured to carry out some aspects of the method either in software, in hardware or in some combination thereof. For example, the system may be configured as part of a computer network that includes the Internet. At least some values for the results of the method can be saved for later use in a computer-readable medium, including memory units (e.g., RAM (Random Access Memory), ROM (Read Only Memory)) and storage devices (e.g., hard-disk systems, optical storage systems).

Additional embodiments also relate to a computer-readable medium that stores (e.g., tangibly embodies) a computer program for carrying out any one of the above-described methods by means of a computer. The computer program may be written, for example, in a general-purpose programming language (e.g., C, C++) or some specialized application-specific language. The computer program may be stored as an encoded file in some useful format (e.g., binary, ASCII). In some contexts, the computer-readable medium may be alternatively described as a computer-useable medium, a computer-storage medium, a computer-program medium or some alternative non-transitory storage medium. Depending on the on the operational setting, specified values for the above-described methods may correspond to input files for the computer program or computer.

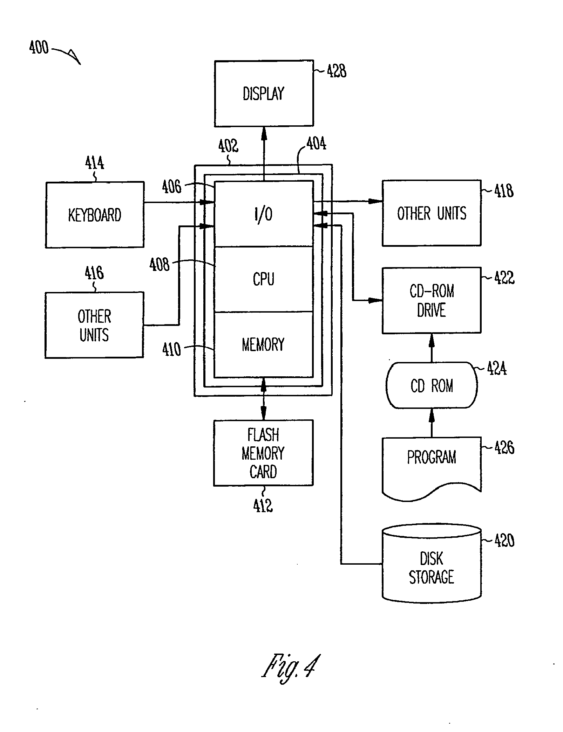

As described above, certain embodiments of the present invention can be implemented using standard computers and networks including the Internet. Figure 4 shows a conventional general purpose computer 400 with a number of standard components. The main system 402 includes a motherboard 404 having an input/output (I/O) section 406, one or more central processing units (CPU) 408, and a memory section 410, which may have a flash memory card 412 related to it. The I/O section 406 is connected to a display 428 which may allow touchscreen inputs, a keyboard 414, other similar general-purpose computer units 416, 418, a disk storage unit 420 and a CD-ROM drive unit 422. The CD-ROM drive unit 422 can read a CD-ROM medium 424 which typically contains programs 426 and other data.

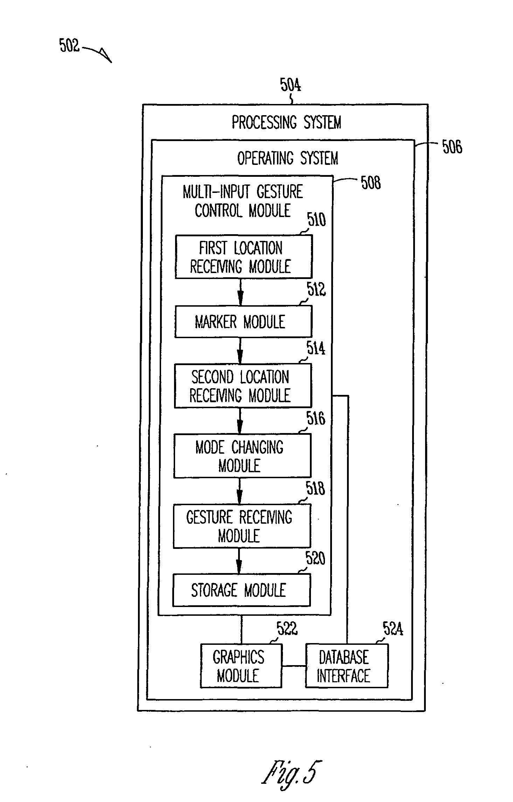

Figure 5 shows a schematic representation of an apparatus 502, in accordance with an example embodiment for multi-input gesture control of a display screen. For example, the apparatus 502 may be used to implement the method 102 of multi-input gesture control as described above. The apparatus 502 is shown to include a processing system 504 that may be implemented on a server, client, or other processing device that includes an operating system 506 for executing software instructions.

In accordance with an example embodiment, the apparatus 502 includes a multi-input gesture control module 508 that includes a first location-receiving module 510, a marker module 512, a second location-receiving module 514, a mode-changing module 516, a gesture-receiving module 518, and a storage module 520. The first location-receiving module 510 operates to receive a first screen input that identifies a first location on the display screen. The marker module 512 operates to provide an image marker at the first location in response to the first screen input, where the image marker persists on the display screen for a response-time period after the first screen input. The second location-receiving module 514 operates to receive a second screen input that identifies a second location on the display screen during the response-time period after the first screen input. The mode-changing module 516 operates to change to an alternative input mode for the display screen based on a position of the second location relative to the image marker. The gesture-receiving module 518 operates to receive a gesture as a screen input in the alternative input mode, where the gesture includes a motion along a path on the display screen starting from the second location. The storage module 520 operates to persistently store display screen data that identifies the first location, the image marker, the second location, and the gesture.

In addition, a graphics module 522 operates to render images on the display screen and a database interface 524 operates to enable access to remote data storage. The database interface 524 may provide database management functionality including a database application, a database management system (DBMS), one or more databases (local and/or remote), input/output (I/O) buffer caches, and the like. The database application may provide order fulfillment, business monitoring, inventory control, online shopping, and/or any other suitable functions by way of interactions with other elements of the processing system 504. According to some example embodiments, the database application communicates with the DBMS over one or more interfaces provided by the DBMS. The database application may, in turn, support client applications executed by client devices.

The DBMS may comprise any suitable system for managing a database instance. Generally, the DBMS may receive requests for data (e.g., Structured Query Language (SQL) requests from the database application), may retrieve requested data from the database and may return the requested data to a requestor. The DBMS may also perform start-up, logging, recovery, management, optimization, monitoring, and other database-related tasks.

Although only certain example embodiments of this invention have been described in detail above, those skilled in the art will readily appreciate that many modifications are possible in the example embodiments without materially departing from the novel teachings and advantages of this invention. For example, aspects of embodiments disclosed above can be combined in other combinations to form additional embodiments. Accordingly, all such modifications are intended to be included within the scope of this invention.

**Claims**

1. A method of multi-input gesture control for a display screen, the method comprising:

   receiving a first screen input that identifies a first location on the display screen;
   providing an image marker at the first location in response to the first screen input, wherein the image marker persists on the display screen for a response-time period after the first screen input;
   receiving a second screen input that identifies a second location on the display screen during the response-time period after the first screen input;
   changing to an alternative input mode based on a position of the second location relative to the image marker; and
   receiving a gesture as a screen input in the alternative input mode, wherein the gesture includes a motion along a path on the display screen starting from the second location.

2. The method of claim 1, wherein
   the image marker surrounds the first location as a single two-dimensional shape,
   and/or a persistence of the image marker is displayed by changing a color or intensity of the image marker over the response-time period.

3. The method of claim 1 or 2, wherein the path of the completed gesture defines an input to an application program.

4. The method of any one of the preceding claims, wherein the second location lies inside the image marker and the gesture defines a new shape on the display screen.

5. The method of any one of the preceding claims, wherein the motion of the gesture defines a continuous manipulation of one or more shapes on the display screen.

6. The method of any one of claims 1 to 3, wherein the second location lies outside the image marker and/or the gesture defines a resizing of one or more shapes on the display screen.

7. The method of any one of the preceding claims, wherein the first and second screen inputs and the gesture each result from touching the display screen, or
   from an application of a pointing device whose movements are echoed on the display screen by a pointer.

8. A non-transitory computer-readable medium embodying instructions which, when

executed by a computer, cause the computer to perform operations according to the method of any one of the preceding claims.

9.  An apparatus including a display screen, the apparatus comprising:

    a first location-receiving module to receive a first screen input that identifies a first location on the display screen;
    a marker module to provide an image marker at the first location in response to the first screen input, wherein the image marker persists on the display screen for a response-time period after the first screen input;
    a second location-receiving module to receive a second screen input that identifies a second location on the display screen during the response-time period after the first screen input;
    a mode-changing module to change to an alternative input mode for the display screen based on a position of the second location relative to the image marker;
    a gesture-receiving module to receive a gesture as a screen input in the alternative input mode, wherein the gesture includes a motion along a path on the display screen starting from the second location; and
    a storage module to persistently store display screen data that identifies the first location, the image marker, the second location, and the gesture.

10. The apparatus of claim 9, wherein
    the image marker surrounds the first location as a single two-dimensional shape, and
    a persistence of the image marker is displayed by changing a color or intensity of the image marker over the response-time period.

11. The apparatus of claim 9 or 10, wherein the path of the completed gesture defines an input to an application program.

12. The apparatus of any one of claims 9 to 11, wherein the second location lies inside the image marker and/or the gesture defines a new shape on the display screen.

13. The apparatus of claim any one of claims 9 to 11, wherein the motion of the gesture defines a continuous manipulation of one or more shapes on the display screen.

14. The apparatus of any one of claims 9 to 11 or 13, wherein the second location lies outside the image marker and the gesture defines a resizing of one or more shapes on the display screen.

15. The apparatus of any one of claims 9 to 14, wherein the first and second screen inputs and the gesture each result from touching the display screen, or
    from an application of a computer pointing device whose movements are echoed on the display screen by a pointer.

102

104
RECEIVE FIRST SCREEN INPUT THAT IDENTIFIES FIRST
LOCATION ON COMPUTER SCREEN

106
PROVIDE IMAGE MARKER THAT PERSISTS FOR REPONSE-
TIME PERIOD AT THE FIRST LOCATION

108
RECEIVE SECOND SCREEN INPUT THAT IDENTIFIES
SECOND LOCATION ON COMPUTER SCREEN

110
CHANGE TO ALTERNATIVE INPUT MODE BASED ON POSITION
OF SECOND LOACATION RELATIVE TO IMAGE MARKER

112
RECEIVE SCREEN-INPUT GESTURE THAT INCLUDES MOTION
ALONG PATH ON COMPUTER SCREEN

*Fig. 1*

Fig.2A

Fig.2B

Fig.2C

Fig.2D

Fig.2E

Fig.2F

Fig.3A

Fig.3B

Fig.3C

Fig.3D

Fig.3E

Fig.3F

400

428
DISPLAY

414
402    404
406
KEYBOARD          I/O          OTHER UNITS    418

408
CPU

416
OTHER
UNITS          410    MEMORY

CD-ROM
DRIVE    422

CD ROM    424

FLASH
MEMORY
CARD

412

PROGRAM    426

DISK
STORAGE    420

*Fig. 4*

502 ⌐

504

PROCESSING SYSTEM

506

OPERATING SYSTEM

508

MULTI-INPUT GESTURE
CONTROL MODULE

510

FIRST LOCATION
RECEIVING MODULE

512

MARKER MODULE

514

SECOND LOCATION
RECEIVING MODULE

516

MODE CHANGING
MODULE

518

GESTURE RECEIVING
MODULE

520

STORAGE MODULE

522

GRAPHICS
MODULE

524

DATABASE
INTERFACE

*Fig.5*